# DEMANDE DE BREVET EUROPEEN

(11) **EP 2 106 959 A1**
(43) Date de publication de la demande: **07.10.2009**
(21) Numéro de dépôt: 09290233.7
(22) Date de dépôt: 30.03.2009
(51) Int. Cl.: B60N 2/20, B60N 2/22, B60N 2/16

(54) **Siège de véhicule automobile comprenant un ressort de rappel conformé en V**

(30) Priorité: 01.04.2008 FR 0801803
(71) Demandeur: Centre d'etude et de recherche pour l'automobile (CERA), 51100 Reims (FR)
(72) Inventeur: Brice, Patrick, 54110 Hudiviller (FR); Le Gall, François, 02130 Coulonges (FR)
(74) Mandataire: Sayettat, Julien Christian

(57) **Abrégé**

L'invention concerne un siège (1) de véhicule automobile comprenant un premier élément (2) structurel et un deuxième élément (3) structurel articulés entre eux, ledit premier élément comprenant un organe (4) disposé entre deux butées (5) prévues sur ledit deuxième élément, de sorte à définir une course angulaire desdits éléments l'un par rapport à l'autre entre une première position et une deuxième position angulaire, ledit siège comprenant en outre un ressort (6) de rappel desdits éléments en première position, ledit ressort étant conformé en V, les extrémités (7) dudit ressort étant fixées audit deuxième élément de sorte que ledit organe soit disposé dans la partie médiane (8) du V, afin de permettre un rappel vers la première position par rétraction dudit ressort..

## Description

L'invention concerne un siège de véhicule automobile.

Il est connu de réaliser un siège de véhicule automobile comprenant un premier élément structurel et un deuxième élément structurel articulés entre eux, ledit premier élément comprenant un organe disposé entre deux butées prévues sur ledit deuxième élément, de sorte à définir une course angulaire desdits éléments l'un par rapport à l'autre entre une première position et une deuxième position angulaire, ledit siège comprenant en outre un ressort de rappel desdits éléments en première position.

Un tel ressort doit permettre d'exercer une force suffisante pour permettre un tel rappel dans la première position.

A cette fin, il doit présenter des dimensions qui peuvent être incompatibles avec l'espace disponible au sein de l'architecture du siège.

L'invention a pour but de proposer un ressort agencé de sorte à occuper un espace compact, et donc pouvant être logé aisément dans l'architecture du siège.

A cet effet, l'invention propose un siège de véhicule automobile comprenant un premier élément structurel et un deuxième élément structurel articulés entre eux, ledit premier élément comprenant un organe disposé entre deux butées prévues sur ledit deuxième élément, de sorte à définir une course angulaire desdits éléments l'un par rapport à l'autre entre une première position et une deuxième position angulaire, ledit siège comprenant en outre un ressort de rappel desdits éléments en première position, ledit ressort étant conformé en V, les extrémités dudit ressort étant fixées audit deuxième élément de sorte que ledit organe soit disposé dans la partie médiane du V, afin de permettre un rappel vers la première position par rétraction dudit ressort.

Dans cette description, les termes de positionnement dans l'espace (latéral, avancé, reculé, rehaussé, abaissé, longitudinal,...) sont pris en référence au siège disposé dans le véhicule.

Le ressort ainsi configuré présente une compacité optimisée.

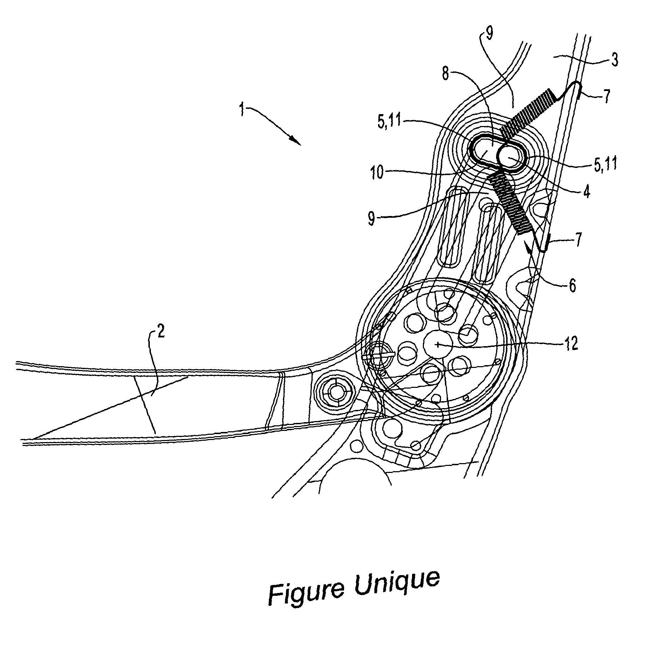

D'autres particularités et avantages de l'invention apparaîtront dans la description qui suit, faite en référence à la figure jointe qui est une vue latérale partielle d'un siège selon une réalisation, les premier et deuxième éléments étant en première position angulaire.

En référence à la figure, on décrit un siège 1 de véhicule automobile comprenant un premier élément 2 structurel et un deuxième élément 3 structurel articulés entre eux, ledit premier élément comprenant un organe 4 disposé entre deux butées 5 prévues sur ledit deuxième élément, de sorte à définir une course angulaire desdits éléments l'un par rapport à l'autre entre une première position et une deuxième position angulaire, ledit siège comprenant en outre un ressort 6 de rappel desdits éléments en première position, ledit ressort étant conformé en V, les extrémités 7 dudit ressort étant fixées audit deuxième élément de sorte que ledit organe soit disposé dans la partie médiane 8 du V, afin de permettre un rappel vers la première position par rétraction dudit ressort.

Les branches 9 du V sont conformées en spirale, les extrémités 7 du ressort 6 étant en forme de crochet de sorte à former moyen d'accrochage au deuxième élément 3, la partie médiane 8 du V étant conformée à la forme de l'organe 4.

Un tel agencement permet de disposer d'un ressort 6 pour lequel on peut prévoir une quantité de spires plus importante que pour un ressort droit qui serait disposé entre l'organe 4 et un point médian entre les points d'accrochage des extrémités 7.

L'organe 4 est sous forme d'un doigt logé dans une lumière 10 prévue dans le deuxième élément 3, les extrémités 11 de ladite lumière formant les butées 5, ledit doigt étant logé en outre dans la partie médiane 8 du V.

Le doigt est disposé parallèlement à l'axe d'articulation 12 des éléments 2,3 entre eux.

Le premier élément 2 est un brancard d'assise et le deuxième élément 3 est un brancard de dossier, la première - respectivement deuxième - position correspondant à une position avancée - respectivement reculée - dudit brancard de dossier.

En première variante non représentée, le premier élément 2 est une embase, destinée à être solidaire du plancher du véhicule, éventuellement par le biais d'un rail coulissant de réglage longitudinal du siège 1, et le deuxième élément 3 est un brancard de dossier, la première - respectivement deuxième - position correspondant à une position avancée - respectivement reculée - dudit brancard.

En deuxième variante non représentée, le premier élément 2 est une bielle, destinée à être solidaire du plancher du véhicule, éventuellement par le biais d'un rail coulissant, ou un brancard d'assise et le deuxième élément 3 est un brancard d'assise ou une bielle, la première - respectivement deuxième - position correspondant à une position rehaussée - respectivement abaissée - dudit brancard.

En troisième variante non représentée, le premier élément 2 est une bielle ou un plancher et le deuxième élément 3 est un plancher ou une bielle, la première
- respectivement deuxième - position correspondant à une position rehaussée
- respectivement abaissée - du brancard d'assise du siège 1.

En quatrième variante non représentée, le premier élément 2 est une bielle ou un rail coulissant et le deuxième élément 3 est un rail coulissant ou une bielle, la première - respectivement deuxième - position correspondant à une position rehaussée - respectivement abaissée - du brancard d'assise du siège 1.

## Revendications

1. Siège (1) de véhicule automobile comprenant un premier élément (2) structurel et un deuxième élément (3) structurel articulés entre eux, ledit premier élément comprenant un organe (4) disposé entre deux butées (5) prévues sur ledit deuxième élément, de sorte à définir une course angulaire desdits éléments l'un par rapport à l'autre entre une première position et une deuxième position angulaire, ledit siège comprenant en outre un ressort (6) de rappel desdits éléments en première position, ledit siège étant **caractérisé en ce que** ledit ressort est conformé en V, les extrémités (7) dudit ressort étant fixées audit deuxième élément de sorte que ledit organe soit disposé dans la partie médiane (8) du V, afin de permettre un rappel vers la première position par rétraction dudit ressort.

2. Siège selon la revendication 1, **caractérisé en ce que** les branches (9) du V sont conformées en spirale, les extrémités (7) du ressort (6) étant en forme de crochet de sorte à former moyen d'accrochage au deuxième élément (3), la partie médiane du V étant conformée à la forme de l'organe (4).

3. Siège selon l'une quelconque des revendications 1 ou 2, **caractérisé en ce que** l'organe (4) est sous forme d'un doigt logé dans une lumière (10) prévue dans le deuxième élément (3), les extrémités de ladite lumière formant les butées (5), ledit doigt étant en outre logé dans la partie médiane (8) du V.

4. Siège selon la revendication 3, **caractérisé en ce que** le doigt est disposé parallèlement à l'axe d'articulation (12) des éléments entre eux.

5. Siège selon l'une quelconque des revendications 1 à 4, **caractérisé en ce que** le premier élément (2) est un brancard d'assise et le deuxième élément (3) est un brancard de dossier, la première - respectivement deuxième - position correspondant à une position avancée - respectivement reculée - dudit brancard de dossier.

6. Siège selon la l'une quelconque des revendications 1 à 4, **caractérisé en ce que** le premier élément (2) est une embase et le deuxième élément (3) est un brancard de dossier, la première - respectivement deuxième - position correspondant à une position avancée - respectivement reculée - dudit brancard.

7. Siège selon l'une quelconque des revendications 1 à 4, **caractérisé en ce que** le premier élément (2) est une bielle ou un brancard d'assise et le deuxième élément (3) est un brancard d'assise ou une bielle, la première - respectivement deuxième - position correspondant à une position rehaussée - respectivement abaissée - dudit brancard.

8. Siège selon l'une quelconque des revendications 1 à 4, **caractérisé en ce que** le premier élément (2) est une bielle ou un plancher et le deuxième élément (3) est un plancher ou une bielle, la première - respectivement deuxième - position correspondant à une position rehaussée - respectivement abaissée - du brancard d'assise dudit siège.

9. Siège selon l'une quelconque des revendications 1 à 4, **caractérisé en ce que** le premier élément (2) est une bielle ou un rail coulissant et le deuxième élément (3) est un rail coulissant ou une bielle, la première - respectivement deuxième - position correspondant à une position rehaussée - respectivement abaissée - du brancard d'assise dudit siège.
